**Europäisches Patentamt**

**European Patent Office**

**Office européen des brevets**

(19)

(11) Publication number: **0 198 530**
**B1**

(12) ## EUROPEAN PATENT SPECIFICATION

(45) Date of publication of the patent specification:
09.08.89

(51) Int. Cl.⁴: **G01F 11/22, B65D 83/06**

(21) Application number: **86200467.8**

(22) Date of filing: **21.03.86**

(54) Liquid dosing and dispensing system.

(30) Priority: **26.03.85 GB 8507786**

(43) Date of publication of application:
**22.10.86 Bulletin 86/43**

(45) Publication of the grant of the patent:
**09.08.89 Bulletin 89/32**

(84) Designated Contracting States:
**AT BE CH DE FR GB IT LI NL SE**

(56) References cited:
**DE-C- 86 032**
**DE-C- 190 378**
**GB-A- 1 051 705**
**US-A- 1 887 931**
**US-A- 1 914 766**

(73) Proprietor: **UNILEVER NV, Burgemeester
s'Jacobplein 1 P.O. Box 760, NL-3000 DK Rotterdam(NL)**

(84) Designated Contracting States: **BE CH DE FR GB IT LI NL SE AT**

(73) Proprietor: **UNILEVER PLC, Unilever House Blackfriars P.O. Box 68, London EC4P 4BQ(GB)**

(84) Designated Contracting States: **GB**

(72) Inventor: **Howard, John Alban, 30 Hartshill, Bedford MK41 9AL(GB)**

(74) Representative: **van Gent, Jan Paulus et al, Unilever N.V. Patent Division P.O. Box 137, NL-3130 AC Vlaardingen(NL)**

ACTORUM AG

## Description

The present invention relates to a liquid-dosing and -dispensing system comprising a combination of a container for liquid and a device for dispensing metered quantities of liquid therefrom, the container being movable from a storage position to a dispensing position at which liquid is deliverable from the container by gravity flow into said dispensing device.

Such liquid-dosing and -dispensing systems are known in the art. For instance, the German Offenlegungsschrift 2 851 449 discloses a bottle with a removable dosing closure, said closure comprising a valve with a ball which operates under the influence of gravity, dependent on the orientation of the bottle.

In those applications where liquid products are delivered in relatively large supply containers and infrequent dosing of accurate quantities of liquid product is necessary, a dispensing and dosing system is desirable which is cheap, easy to operate and which requires a minimum of maintenance. In particular, in applications with chemicals which are hazardous to health or corrosive, it is necessary that such dispensing and dosing systems are non-dripping during filling the device with liquid product from the container or during detaching it from the container for discharge of the metered quantity at the actual site of use.

It has been found that the currently known systems have a number of shortcomings which it is the object of the present invention to overcome.

More specifically, it is an object of the present invention to provide a dispensing and dosing system which is simple in construction and economical to produce. It is a further object of the present invention to provide such a system which is safe in use in that it can be easily connected to the supply container, filled with a metered quantity of liquid and detached from the supply container without any risk of dripping or leaking.

It is still a further object to provide such a system which is easy to operate and allows accurate dosing of metered quantities of liquid.

Accordingly, the present invention provides a combination of a container for liquid and a device for dispensing metered quantities of liquid therefrom, the container being movable from a storage position to a dispensing position at which liquid is deliverable from the container by gravity flow into said dispensing device, wherein the dispensing device comprises a valve engaged in the delivery opening of the container and capable of controlling the flow of liquid therefrom, and a metering bottle characterized in that said bottle is engageable in the valve in the delivery opening and movable from a first position at which the bottle is capable of receiving liquid from the container, to a second position at which the bottle is disengageable from the valve in the delivery opening while the container is in its dispensing position without losing liquid from the container, and in that an air pocket is retained inside the bottle when it is in the first position and the container is in its dispensing position, which air pocket is displaced by liquid and transferred to a position adjacent to the valve by movement o the bottle to the second position.

The dispensing device in accordance with the present invention comprises a valve which is engaged in the delivery opening of the container and capable of controlling the flow of liquid from the container when in its dispensing position. Preferably, the bottle actuates the valve and the valve is operable by movement of the metering bottle between its first and second position. In the first position of the bottle, the valve is open and liquid can flow from the container into the metering bottle, whereas in the second position, the valve is closed, blocking the flow of liquid into the bottle.

I a preferred embodiment of the present invention a valve and bottle combination is used wherein the valve is operable by rotary movement of the bottle over a suitable angle, e.g. a rotary movement over 180°. A preferred type of valve then is a flat rotary disk valve, i.e. a valve which comprises two concentric parallel plates having throughlet openings in juxtaposition when the valve is open.

It is often desirable and preferred to design the device such that the bottle can be attached to and detached from the delivery opening of the container only in the second position, i.e. the position which corresponds to the arrangement in which the valve is closed.

The shape of the bottle is such that when it is in the first position and the bottle is filled by gravity flow with liquid from the container, an air pocket is retained which remains free from liquid. By movement of the bottle to the second position, the retained air is displaced by liquid and transferred to a position adjacent to the valve due to gravity flow of liquid inside the bottle.

Preferably the bottle is engageable in or to the valve in delivery opening of the container by a bayonet fixing. Suitable adaptor parts may be provided to ensure leak-free engagement of the bottle and valve to the delivery opening.

Suitably the valve and the optional adaptor parts are such that they can be mounted in the delivery opening of said container instead of the normal closure cap.

Preferably means are provided whereby the container is held in its dispensing position.

The invention will now be described in more detail with reference to the accompanying drawings in which:

Figure 1 is a sectional view of a preferred embodiment of the dispensing and dosing system according to the present invention as mounted in the delivery opening of a container drawn in cut-off fashion, the valve being open;

Figure 2 is a similar view, the valve being closed; and

Figure 3 is a side view of a container and dispenser combination.

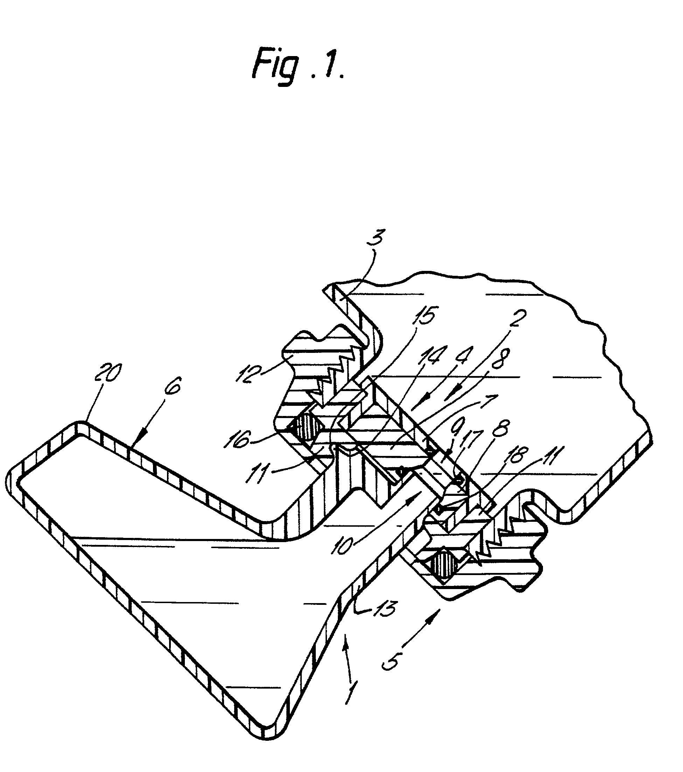

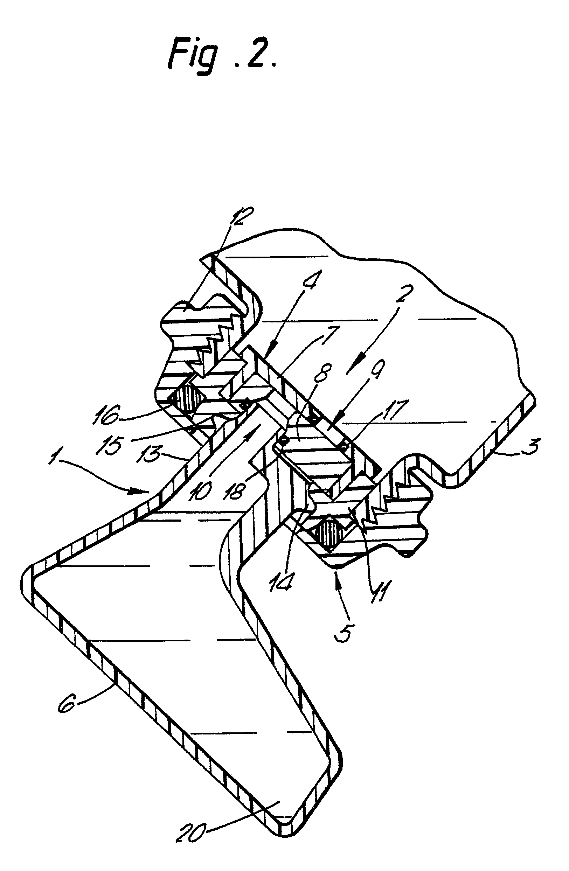

Referring now to the drawings, a dispensing device 1 is shown, mounted in the delivery opening 2 of a liquid supply container 3 which is drawn cut off in Fig. 1 and 2.

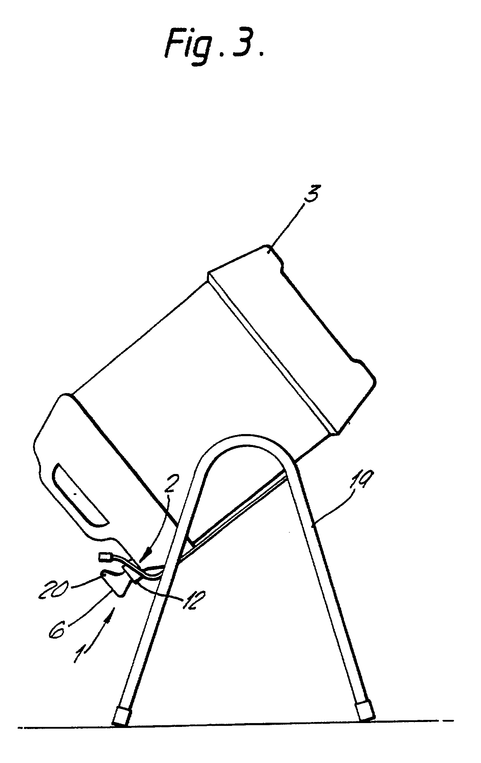

Dispensing device 1 comprises a valve 4, engagement means 5 and a metering bottle 6. Valve 4 is a rotary disk valve consisting of a stationary part 7 and a rotary disk valve consisting of a stationary part 7 and a rotary disk 8. Valve parts 7 and 8 have eccentrically located throughlet openings 9 and 10 which are juxtaposition when valve 4 is open (Fig. 1). Engagement means 5 comprises an adaptor part 11 which holds stationary part 7 securely fixed, and an open screw cap 12 for holding adaptor part 11 positionally fixed in delivery opening 2. Neck 13 of dosing bottle 6 co-operates with adaptor part 11, the combination constituting a bayonet type fixing. To this purpose neck 13 is provided with a bayonet stop 14 falling into bayonet notch 15 of adaptor part 11. In mounted position mouth 15 of bottle 6 is engaged in throughlet opening 10 of rotary disk 8. To ensure leak-free operation, O-rings 16, 17 and 18 are provided. A container and dispenser combination under use conditions is shown in Fig. 3, a cradle 19 holding the combination in such position that liquid product is deliverable by gravity flow through delivery opening 2.

In the position as shown in Fig. 1, bottle 6 is filled by gravity flow with the liquid product from the container. The shape of bottle 6 is such that in this arrangement cavity 20 functions as an air trap, remaining free from liquid product. Bottle 6 is not detachable from the delivery opening by pulling action due to the bayonet fixing (stop 14 and notch 15). By 180°-rotary movement of bottle 6 along the central axis of the delivery opening 2, the dispensing device is brought into the position as shown in Fig. 2. Owing to engagement of mouth 15 in throughlet opening 10, rotary movement of the bottle results in rotary movement of disk 8 such that after 180°-rotation the valve is in closed position (Fig. 2). The position of the bottle is now such that cavity 20 can no longer function as air trap and accordingly is filled by gravity flow with liquid from the bottle. Valve 4 being closed, the rotary movement of the bottle results in air being displaced to neck 13 of the bottle. In this position (Fig. 2), bottle 6 can be detached from the delivery opening by a simple pulling action. Since neck 13 is free from liquid, there is no risk of dripping. After discharge of its contents bottle 6 can be simply inserted into the position as shown in Fig. 2 and refilled by a 180°-rotation to the position as shown in Fig.1.

The various parts can be manufactured from any suitable material, in particular mouldable plastics and the like.

The valve and dosing bottle can be fitted to containers having different types of delivery openings by using adapted types of engagement means.

The dispensing device can be provided with a set of metering bottles having similar geometry of neck and mouth parts, but differing in size so that the user may select the dosing quantity he desires.

## Claims

1. A combination of a container (3) for liquid and a device (1) for dispensing metered quantities of liquid therefrom, the container being movable from a storage position to a dispensing position at which liquid is deliverably from the container by gravity flow into said dispensing device, wherein the dispensing device comprises a valve (4) engaged in the delivery opening (2) of the container and capable of controlling the flow of liquid therefrom, and a metering bottle (6) characterized in that said bottle is engageable in the valve in the delivery opening and movable from a first position at which the bottle is capable of receiving liquid from the container, to a second position at which the bottle is disengageable from the valve in the delivery opening while the container is in its dispensing position, without losing liquid from the container and in that an air pocket is retained inside the bottle when it is in the first position and the container is in its dispensing position, which aire pocket is displaced by liquid and transferred to a position adjacent to the valve by movement of the bottle to the second position.

2. A combination according to Claim 1, wherein the bottle (6) actuates the valve (4) and the valve is operable by movement of the bottle between the first and the second position.

3. A combination according to Claim 1 or 2, wherein the bottle (6) is movable between the first and the second position by rotary movement.

4. A combination according to Claim 3 wherein the valve (4) is a rotary disk valve.

5. A combination according to any one of the preceding Claims wherein the arrangement is such that the bottle is disengageable from the container only in the second position.

6. A combination according to any one of the preceding Claims wherein the bottle is engageable in the valve in the delivery opening by a bayonet fixing.

## Revendications

1. Combinaison d'un conteneur (3) pour liquide et d'un dispositif (1) pour en distribuer des quantités dosées de liquide, le conteneur pouvant passer d'une position de stockage à une position de distribution pour laquelle le liquide peut sortir du conteneur par écoulement par gravité pour venir dans ledit dispositif de distribution, combinaison dans laquelle le dispositif de distribution comporte une vanne (4) qui s'ajuste dans l'ouverture de sortie (2) du conteneur et qui est capable d'en commander le débit de liquide, ainsi qu'une bouteille de dosage (6), caractérisée en ce que ladite bouteille peut venir en prise dans la vanne qui se trouve dans l'ouverture de sortie et peut se mouvoir pour passer d'une première position, à laquelle la bouteille est capable de recevoir du liquide en provenance du conteneur, à une seconde position à laquelle la bouteille peut être dégagée de sa prise avec la vanne qui se trouve dans l'ouverture de sortie, tandis que le conteneur est dans sa position de distribution, sans perte de liquide en provenance du conteneur; et en ce qu'une poche d'air est retenue à l'intérieur de la bouteille lorsque celle-ci se trouve dans la première position et que le conteneur se trouve dans sa position de distribution, laquelle poche d'air est déplacée par le liquide et transférée à une position voisine de la vanne lors du mouvement de la bouteille pour passer dans la seconde position.

2. Combinaison selon la revendication 1, dans laquelle la bouteille (6) actionne la vanne (4) et dans laquelle la vanne peut se manœuvrer par mouvement de la bouteille entre la première et la seconde position.

3. Combinaison selon la revendication 1 ou 2, dans laquelle la bouteille (6) peut se mouvoir entre la première et la seconde position par mouvement tournant.

4. Combinaison selon la revendication 3, dans laquelle la vanne (4) est une vanne à disque tournant.

5. Combinaison selon l'une quelconque des revendications précédentes, dans laquelle la disposition est telle que la bouteille ne peut être dégagée de sa prise avec le conteneur que dans la seconde position.

6. Combinaison selon l'une quelconque des revendications précédentes, dans laquelle la bouteille peut venir en prise avec le robinet dans l'ouverture de sortie au moyen d'une fixation à baïonnette.

## Patentansprüche

1. Kombination eines Behälters (3) für Flüssigkeit und einer Abgabevorrichtung (1) zum Abgeben abgemessener Mengen der Flüssigkeit daraus, wobei der Behälter von einer Lagerstellung in eine Abgabestellung, in der Flüssigkeit aus dem Behälter durch schwerkraftbewirkte Strömung in die Abgabevorrichtung übergebbar ist, bewegbar ist und die Abgabevorrichtung ein in der Abgabeöffnung (2) des Behälters eingesetztes Ventil (4), das die Flüssigkeitsströmung aus dem Behälter steuert, und eine Meßflasche (6) umfaßt, dadurch gekennzeichnet, daß diese Flasche an das Ventil in der Abgabeöffnung ansetzbar und von einer ersten Stellung, in der die Flasche Flüssigkeit aus dem Behälter aufnehmen kann, in eine zweite Stellung, in der die Flasche vom Ventil in der Abgabeöffnung abnehmbar ist, bewegbar ist, während sich der Behälter in seiner Abgabestellung befindet, ohne daß Flüssigkeit aus dem Behälter verlorengeht, und daß innerhalb der Flasche eine Lufttasche verbleibt, wenn sie sich in ihrer ersten Stellung und der Behälter in seiner Abgabestellung befinden, und diese Lufttasche durch die Bewegung der Flasche in die zweite Stellung durch Flüssigkeit ersetzt und in eine Position angrenzend an das Ventil transferiert wird.

2. Kombination nach Anspruch 1, bei der die Flasche (6) das Ventil (4) betätigt und das Ventil durch die Bewegung der Flasche zwischen der ersten und der zweiten Stellung umstellbar ist.

3. Kombination nach Anspruch 1 oder 2, bei der die Flasche (6) zwischen der ersten und der zweiten Stellung durch eine Drehbewegung verstellbar ist.

4. Kombination nach Anspruch 3, bei der das Ventil (4) ein Drehscheibenventil ist.

5. Kombination nach einem der vorhergehenden Ansprüche, mit einer solchen Anordnung, daß die Flasche vom Behälter nur in der zweiten Stellung abnehmbar ist.

6. Kombination nach einem der vorhergehenden Ansprüche, bei der die Flasche an das Ventil in der Abgabeöffnung durch einen Bajonettverschluß ansetzbar ist.

# Fig .1.

# Fig .2.

# Fig. 3.